(19) **Europäisches Patentamt**

**European Patent Office**

**Office européen des brevets**

(11) **EP 1 701 553 A2**

(12) **EUROPEAN PATENT APPLICATION**

(43) Date of publication:
**13.09.2006 Bulletin 2006/37**

(51) Int Cl.:
*H04N 7/50* (2006.01)    *H04N 5/45* (2006.01)
*H04N 7/26* (2006.01)

(21) Application number: **06100737.3**

(22) Date of filing: **23.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.03.2005 JP 2005069890**

(71) Applicant: **KABUSHIKI KAISHA TOSHIBA Tokyo (JP)**

(72) Inventors:
• **Uchida, Kosuke**
**Toshiba Corporation**
**Minato-ku, Tokyo 105-8001 (JP)**

• **Kitada, Noriaki**
**Toshiba Corporation**
**Minato-ku, Tokyo 105-8001 (JP)**
• **Hoshina, Satoshi**
**Toshiba Corporation**
**Minato-ku, Tokyo 105-8001 (JP)**

(74) Representative: **Henkel, Feiler & Hänzel**
**Patentanwälte**
**Maximiliansplatz 21**
**80333 München (DE)**

(54) **Video decoder**

(57) A video reproduction application program (201) monitors whether or not blend processing for superimposing one of two images on the other is executed, and executes all decode processings (normal decode processings), when the blend processing is not executed. On the other hand, when the blend processing is executed, a specific processing is executed in which decoding of a color component is omitted from decode processing for decoding the images to be subjected to the blend processing. As a result, the load on the system is reduced.

FIG.3

EP 1 701 553 A2

**Description**

The present invention relates to a technique for decoding a moving picture stream, which can be suitably applied to an information processing apparatus such as a personal computer.

In recent years, personal computers having audiovisual (AV) functions similar to those of AV devices such as Digital Versatile Disc (DVD) players and televisions have spread. This type of personal computer employs a software decoder which decodes a compressively encoded moving picture stream by using software. The software enables a compressively encoded moving picture stream to be decoded by a processor (CPU) without the need to provide a specific hardware.

Furthermore, recently, H. 264/AVC (advanced video encoding) has captured attention as a next-generation moving picture compressive encoding technique. H. 264/AVC standards enable compressive encoding to be carried out more highly efficiently than conventional compressive encoding techniques such as MPEG2 and MPEG4. Thus, the load on the processor in each of encoding processing and decoding processing complying with H. 264/AVC standards is higher than those in conventional compressive encoding techniques such as MPEG2 and MPEG4.

On the other hand, various methods for reducing the amount of decoding of a moving picture stream as disclosed in, e.g., Jpn. Pat. Appln. KOKAI Publication No. 8-339447 have been proposed until now. The publication discloses a technique in which processing for decoding a color component is omitted to reduce the load on a video decoder.

However, in general, processing for decoding a color component cannot be omitted from processing for decoding a moving picture stream, even if the load on the video decoder can be reduced.

Recently, blend processing for superimposing a picture on another picture has been able to be achieved by software. The blend processing is not merely intended to combine two pictures into a single picture. That is, in the blend processing, two pictures are superimposed together in such a manner as to adjust the transparency (non-transparency) of the upper one of the two pictures, thereby enabling the lower one thereof to be viewed through the upper picture. By virtue of such superimposition of a high order, for example, the two pictures can be viewed in the same field of vision.

During the above blend processing, processing for decoding a color component in one of the two pictures or both the two pictures can be omitted. In this case, whether it can be omitted or not depends on setting of the system by the user. The omission of the above decode processing is a great advantage, especially for a personal computer which allows a number of software to be used at the same time.

The present invention has been made in consideration of the foregoing circumstances, and its object is to provide an information processing apparatus and an information processing program, which can reduce the load on the system in decoding of a moving picture stream.

In order to achieve the above object, the information processing apparatus of the present invention comprises means for executing a decoding process for decoding a compressively encoded moving picture stream; means for producing a picture by superimposing a second picture on a first picture; and means for executing a controlling process for omitting a decoding process for decoding a color component from the decoding process of the decode processing unit on at least one of the first and second pictures.

The present invention can provide an information processing apparatus and an information processing program, which can reduce the load on the system in decoding of a moving picture stream.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a perspective view showing an external appearance of a computer according to an embodiment of the present invention.
FIG. 2 is a view showing the system configuration of the computer according to the embodiment of the present invention.
FIG. 3 is a block diagram of a functional configuration of a video reproduction application program for use in the computer.
FIG. 4 is a block diagram showing the structure of a software decoder as which the video reproduction application program functions.
FIG. 5 is a view for use in explaining an example of blend processing (alpha blending).
FIG. 6 is a flowchart indicating the procedure of decode processing to be performed by a video reproduction application program in the embodiment of the present invention.
FIG. 7 is a view showing a moving picture stream to be decoded by the video reproduction application program in the embodiment of the present invention.
FIG. 8 is a view showing access units of the moving picture stream to be decoded by the video reproduction application program in the embodiment of the present invention.

FIG. 9 is a view showing a relationship between the value of "chroma format idc" in a NAL unit of "SPS" in the moving picture stream to be decoded by the video reproduction application program and the ratio of a color component in the embodiment of the present invention.

An embodiment of the present will be explained with reference to the accompanying drawings.

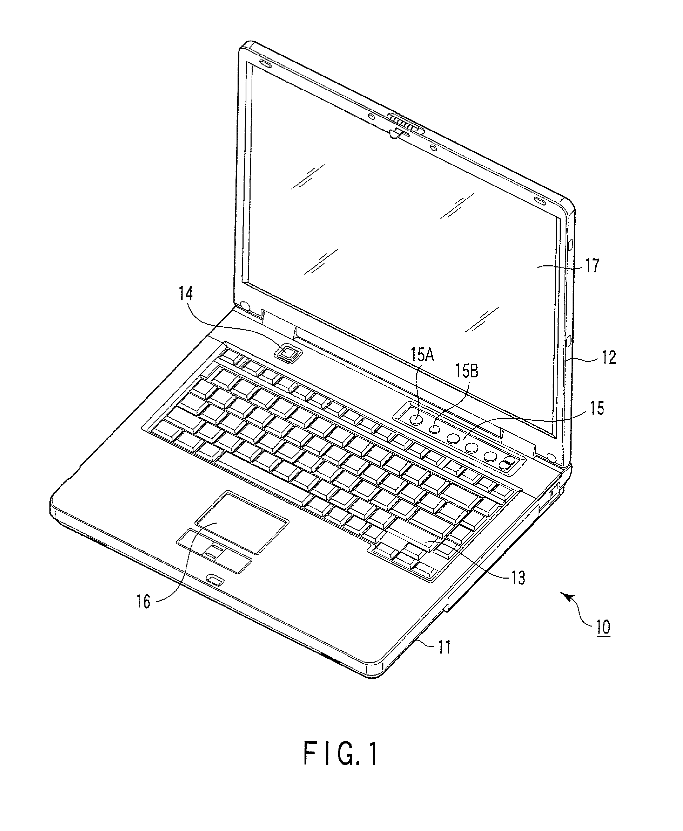

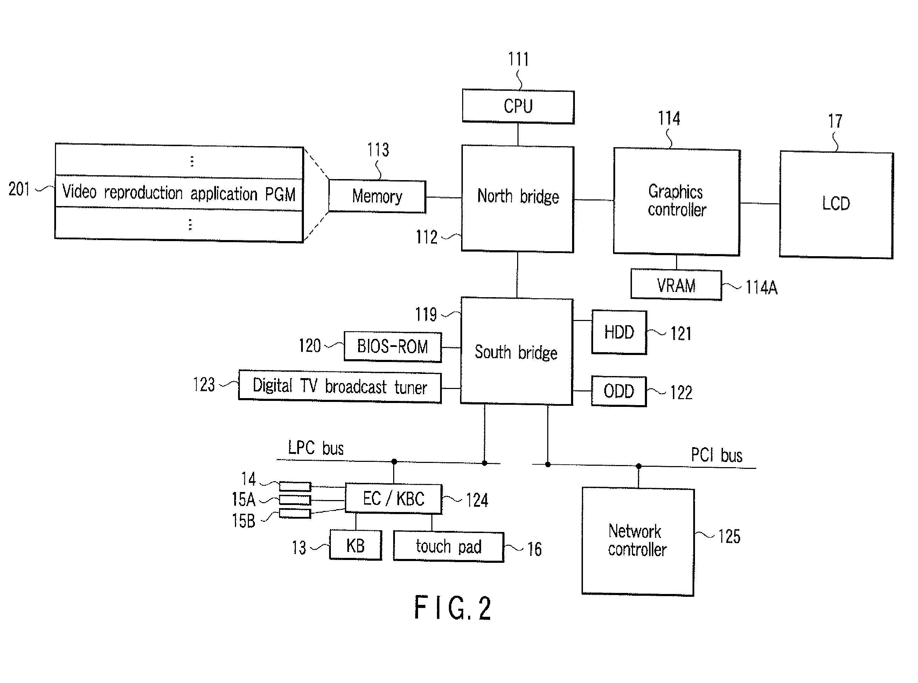

First, the structure of an information processing apparatus according to the embodiment of present invention will be explained with reference to FIGS. 1 and 2. The information processing apparatus is provided as, e.g., a notebook computer 10.

FIG. 1 is a perspective view of the notebook computer 10, for showing that a display unit of the notebook computer 10 is open. The computer 10 comprises a main body 11 and a display unit 12. The display unit 12 incorporates a display device comprising a liquid crystal display (LCD) 17, and a display screen of the LCD 17 is located at substantiaily the center of the display unit 12.

The display unit 12 is provided at the main body 11 in such a manner as to be rotatable between its open position and closed position. The main body 11 includes a thin box-shaped housing. On an upper surface of the main body 11, a keyboard (KB) 13, a power button 14, an input operation panel 15 and a touch pad 16 are provided. The power button 14 is used in turning on/off a power source.

The input operation panel 15 is an input device for inputting a control signal to a system, and comprises a group of buttons for starting up respective functions. To be more specific, when any of the buttons is pressed, an associated control signal is input to the system. The buttons include a TV starting button 15A and a digital versatile disk (DVD) starting button 15B. The TV starting button 15A is a button for causing a TV function to be performed. The TV function is a function of carrying out reproduction and recording of broadcasting program data such as a digital TV broadcasting program. When the TV starting button 15A is pressed by the user, a TV application program for performing the TV function is started up. Furthermore, the DVD starting button 15B is a button for causing video contents recorded on a DVD to be reproduced. When the DVD starting button 15B is pressed by the user, an application program for reproducing the video contents is automatically started up.

Next, the system configuration of the computer 10 will be explained with reference to FIG. 2.

The computer 10, as shown in FIG. 2, comprises a CPU 111, a North Bridge 112, a main memory 113, a graphics controller 114, a South Bridge 119, a BIOS-ROM 120, a hard disk drive (HDD) 121, an optical disk drive (ODD) 122, a digital TV broadcast tuner 123, an embedded controller/keyboard controller IC (EC/KBC) 124 and a network controller 125, etc.

The CPU 111 is a processor provided to control the operation of the computer 10, and execute an operation system (OS) and various kinds of application programs such as a video reproduction application program 201.

The video reproduction application program 201 is software for decoding and reproducing compressively encoded moving picture data. The video reproduction application program 201 is a software decoder complying with H. 264/AVC standards. The video reproduction application program 201 has a function of decoding a moving picture stream compressively encoded by a encoding method defined in H. 264/AVC standards (such as a TV broadcasting program received by the digital TV broadcast tuner 123 or video contents complying with High Definition (HD) standards, which are read out from the ODD 122).

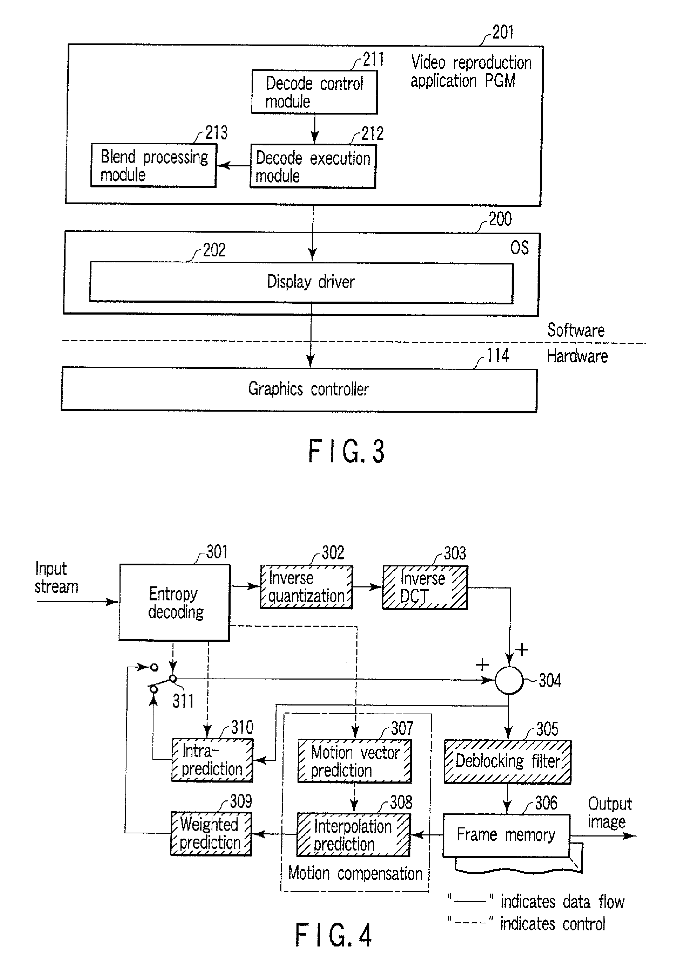

The video reproduction application program 201, as shown in FIG. 3, comprises a decode control module 211, a decode execution module 212 and a blend processing module 213.

The decode execution module 212 is a decoder for executing a decode processing defined by H. 264/AVC standards. The blend processing module 213 executes a blend processing for superimposing two pictures decoded by the decode execution module 212. The blend processing are intended to superimpose one of the two pictures on the other in units of one pixel on the basis of alpha data added to picture data of said one of the two pictures (alpha blending). The alpha data is a coefficient indicating the transparency (or non-transparency) of each of the pixels of said one of the two pictures. The following explanation will be given on the premise that the above two pictures are both decoded by the decode execution module 212. However, the present invention is not limited to such a case. For example, when the two pictures are superimposed, any of the pictures may be a painted picture (graphic) such as a menu picture prepared in advance for a user interface.

The decode control module 211 controls the decode processing of the decode execution module 212 in accordance with whether or not a picture decoded by the decode execution module 212 is to be subjected to the blend processing of the blend processing module 213. To be more specific, when the picture decoded by the decode execution module 212 is not to be subjected to the blend processing of the blend processing module 213, the decode control module 211 controls the decode processing of the decode execution module 212 such that the decode processing defined in H. 264/AVC standards is executed by the CPU 111. On the other hand, when the picture decoded by the decode execution module 212 is to be subjected to the blend processing of the blend processing module 213, the decode control module 211 controls the decode processing of the decode execution module 212 such that part of the decode processing defined by H. 264/AVC standards is omitted.

Moving picture data decoded by the video reproduction application program 201 is successively written to a video memory (VRAM) 114A of the graphics controller 114 through a display driver 202. Thereby, the decoded moving picture data is displayed by the LCD 17. The display driver 202 is software for controlling the graphics controller 114.

The CPU 111 executes a system Basic Input Output System (BIOS) stored in the BIOS-ROM 120. The system BIOS is a program for controlling hardware.

The North Bridge 112 is a bridge device connecting a local bus of the CPU 111 and the South Bridge 119. The North Bridge 112 incorporates a memory controller for controlling access to the main memory 113. Also, the North Bridge 112 has a function of communicating with the graphics controller 114 through an Accelerated Graphics Port (AGP) bus.

The graphics controller 114 is a display controller for controlling the LCD 17, which is used as a display monitor of the computer 10. The graphics controller 114 produces a display signal to be supplied to the LCD 17 based on the picture data written to the video memory (VRAM) 114A.

The South Bridge 119 controls devices located on a Low Pin Count (LPC) bus and those on a Peripheral Component Interconnect (PCI). Also, the South Bridge 119 incorporates an Integrated Drive Electronics (IDE) controller for controlling the HDD 121 and the ODD 122. In addition, the South Bridge 119 has a function of controlling the digital TV broadcast tuner 123, and also controlling access to the BIOS-ROM 120.

The HDD 121 is a memory device for storing kinds of software and data. The ODD 122 is a drive unit for driving a storage medium such as a DVD where video contents are stored. The digital TV broadcast tuner 123 is a receiver for receiving broadcasting program data such as a digital TV broadcasting program, from an external device or the like.

The embedded controller/keyboard controller IC (EC/KBC) 124 is a one-chip microcomputer in which an embedded controller for power control and a keyboard controller for controlling the keyboard (KB) 13 and the touch pad 16 are formed integrated with each other. The EC/KBC 124 has a function of turning on/off the power supply of the computer 10 in accordance with the operation of the power button 14 by the user. Furthermore, the EC/KBC 124 can turn on the power supply 10 in accordance with the operations of the TV starting button 15A and the DVD starting button 15B by the user. The network controller 125 is a communication device for communicating with an external network such as the Internet.

The functional configuration of the software decoder as which the video reproduction application program 201 functions will be explained with reference to FIG. 4.

The decode execution module 212 of the video reproduction application program 201 complies with H. 264/AVC standards, and as shown in FIG. 4, includes an entropy decoding section 301, an inverse quantizing section 302, an inverse discrete cosine transform (DCT) section 303, an adding section 304, a deblocking filter section 305, a frame memory 306, a motion vector prediction section 307, an interpolation prediction section 308, a weighted prediction section 309, an intra-prediction section 310 and a mode switching section 311. Although orthogonal transformation of H. 264 standards is carried out at an integer-precision, and is different from an ordinary DCT, it will be hereinafter referred to as DCT.

Encoding of each of pictures is carried out in units of one micro-block of $16 \times 16$ pixels. In each of micro-blocks, an intra-frame encoding mode (intra-encoding mode) or a motion compensation inter-frame prediction encoding mode (inter-encoding mode) is selected.

In the motion compensation inter-frame prediction encoding mode, a motion is predicted from a encoded picture or pictures, and a motion compensation inter-frame prediction signal associated with a picture to be encoded is produced. Then, a prediction error signal obtained by eliminating the motion compensation inter-frame prediction signal from the above picture to be encoded is encoded by DCT, quantization and entropy encoding. Furthermore, in the intra-encoding mode, a prediction signal is produced from the picture to be encoded, and is then encoded by DCT, quantization and entropy encoding.

In order to increase the compression ratio, a Codec complying with H. 264/AVC standards utilizes the following techniques (1) to (6): (1) motion compensation carried out at a higher pixel precision (1/4 pixel precision) than MPEG; (2) intra-frame prediction for enabling intra-frame encoding to be efficiently performed; (3) a deblocking filter for reducing a block distortion; (4) integer DCT to be performed in units of 4 x 4 pixels; (5) a multi-reference frame in which a number of pictures of arbitrary positions can be used as reference pictures; and (6) weighted prediction.

The operation of the software decoder will be explained.

A moving picture stream compressively encoded in accordance with H. 264/AVC standards is input to the entropy decoding section 301. The compressively encoded moving picture stream includes motion vector information used in motion compensation inter-frame prediction encoding (inter-prediction encoding), intra-frame prediction information used in intra-frame prediction encoding (intra-prediction encoding) and mode information indicating a prediction mode (inter-prediction encoding/intra-prediction encoding), etc., in addition to encoded picture information.

The decode processing is executed in units of one macro-block of, e.g., 15 x 16 pixels. The entropy decoding section 301 performs an entropy decode processing, which is similar to variable-length encoding, on the moving picture stream, and separates from the moving picture stream a quantization DCT coefficient, motion vector information (motion vector differential information), intra-frame prediction information and mode information. In this case, for example, each of the macro-blocks in the picture to be decoded is subjected to entropy decode processing in units of one block of 4 x 4 pixels (or 8 x 8 pixels), and is converted into a $4 \times 4$ (or 8 x 8) quantization DCT coefficient. In the following explanation, suppose each block consists of $4 \times 4$ pixels. The motion vector information is sent to the motion vector prediction section 307. The intra-frame prediction information is sent to the intra-prediction section 310. The mode information is sent to the mode switching section 311.

The 4 x 4 quantization DCT coefficient of each of blocks to be decoded in the above picture is converted to 4 x 4 DCT coefficient (orthogonal transformation coefficient) by inverse quantization processing of the inverse quantizing section 302. The 4 x 4 DCT coefficient is converted into a 4 x 4 pixel value by inverse integer DCT (inverse orthogonal conversion) processing of the inverse DCT section 303 on the basis of frequency information. The 4 x 4 pixel value corresponds to a prediction error signal associated with a block to be decoded. The prediction error signal is sent to the adding section 304, and a prediction signal (motion compensation inter-frame prediction signal or intra-frame prediction signal) associated with the block to be decoded is added to the above prediction error signal in the adding section 304, thereby decoding the 4 x 4 pixel value.

In the intra-prediction mode, the intra-prediction section 310 is selected by the mode switching section 311, as a result of which the intra-frame prediction signal is added from the intra-prediction section 310 to the prediction error signal. In the inter-prediction mode, the weighted prediction section 309 is selected by the mode switching section 311, as a result of which the motion compensation inter-frame prediction signal obtained by the motion vector prediction section 307, the interpolation prediction section 308 and the weighted prediction section 309 is added to the prediction error signal.

In such a manner, the prediction signal (motion compensation inter-frame prediction signal or intra-frame prediction signal) is added to the prediction error signal associated with the block to be decoded, and processing for decoding the picture to be decoded is carried out in units of predetermined blocks.

Each of decoded pictures is stored as data in the frame memory 306, after being subjected to the deblocking filter processing of the deblocking filter section 305. To be more specific, the deblocking filter section 305 performs deblocking filter processing for reducing block distortion on each decoded picture in units of one block consisting of, e.g., 4 x 4 pixels. The deblocking filter processing prevents block distortion from being reflected on the reference picture, and also on each decoded picture. The load on the software decoder in the deblocking filter processing is enormous. There is a case where it corresponds to 50% of the total load on the software decoder. The deblocking filter processing is appropriately carried out such that strong filtering is performed on part of a decoded picture in which block distortion easily occurs, and weak filtering is performed on part of the decoded picture in which block distortion does not easily occur. The deblocking filter processing is carried out in a manner of loop filter processing.

Then, each picture subjected to the deblocking filter processing is read out from the frame memory 306 as an output picture frame (or output picture field). Furthermore, each of pictures to be used as reference pictures for the motion compensation inter-frame prediction is held in the frame memory 306 for a given time period. In motion compensation inter-frame prediction encoding complying with H. 264/AVC standards, a number of pictures can be used as reference pictures. Thus, the frame memory 306 includes a plurality of frame memory sections for storing respective picture data on the pictures.

The motion vector prediction section 307 produces motion vector information based on vector differential information associated with the block to be decoded. The interpolation prediction section 308 produces a motion compensation inter-frame prediction signal from a group of pixels arranged in an integer precision in a reference picture and a group of predicted interpolation pixels arranged in a 1/4 pixel precision on the basis of motion vector information associated with the block to be decoded. In production of the interpolation pixels arranged in a 1/4 pixel precision, a 1/2 picture is produced by using six tap filters (having six input terminals and one terminal). Thus, prediction interpolation processing of high precision, which considers a high frequency component, can be carried out. However, in this case, it is necessary to process a large amount of data in motion compensation.

The weighted prediction section 309 performs processing for multiplying the value of the motion compensation inter-frame prediction signal by a weighting factor in units of one motion compensation block, thereby producing a weighted motion compensation inter-frame prediction signal. The weighted prediction is processing for predicting the brightness of the picture to be decoded. The weighted prediction processing can improve the quality of a picture whose brightness varies with the passage of time as in fade-in and fade-out. However, in the weighted prediction processing, the load on the software decoder is increased.

The intra-prediction section 310 produces, from the picture to be decoded, the intra-frame prediction signal for a block to be decoded in the picture. The intra-prediction section 310 performs in-picture prediction processing based on the intra-frame prediction information to produce an intra-frame prediction signal from a pixel value regarding another block which is already decoded and located close to the block to be decoded in the above picture. The intra-frame prediction (infra-prediction) is a technique for increasing the compression ratio by utilizing a pixel correlation between blocks. In the intra-frame prediction, with respect to, e.g., 16 x 16 pixels, one of four prediction modes, i.e., vertical prediction (prediction mode 0), horizontal prediction (prediction mode 1), average-value prediction (prediction mode 2) and plane prediction (prediction mode 3), is selected in units of one intra-frame prediction block in accordance with the intra-frame prediction information. The frequency of selection of the plane prediction is lower than any of those of the vertical prediction, the horizontal prediction and the average-value prediction; however, the load on the software decoder in the plane prediction is higher than any of those of the vertical prediction, the horizontal prediction and the average-value prediction.

In the embodiment of the present invention, when the blend processing of the blend processing module 213 is carried out, the decode processing explained with reference to FIG. 4 (which will be hereinafter referred to as normal decode processing) and specific decode processing are selectively carried out in decode processing on a picture which is subjected to the blend processing. The specific decode processing is decode processing in which processing for decoding a color component (Cb/Cr) is omitted from the normal decode processing. That is, in the case where a picture (upper picture) is superimposed on another picture (lower picture), and it is acceptable for the user that the lower picture is monochrome or part of the lower picture on which the upper picture is superimposed is monochrome, when the system is set to achieve such superimposition, processing for decoding a color component is omitted from decode processing on the entire lower picture or the above part of the lower picture, thus reducing the load on the system. Such setting may be carried out by any method. For example, the user may carry out the setting by performing a predetermined operation while viewing a set picture for user interface, which is provided by the video reproduction application program 201.

The blend processing (alpha blending) of the blend processing module 213 will be briefly explained.

In the case where on a first picture (lower picture), a second picture (upper picture) is superimposed to obtain a composite picture, the blend processing module 213 calculates colors of the pixels of the composite picture by using the following equation (1):

$$V = \alpha \times B + (1 - \alpha)A \qquad \qquad . . . (1)$$

where V is the color of each of the pixels of the composite picture obtained by the alpha blending, $\alpha$ is alpha data associated with each of the pixels of the second picture, B is the color of each of the pixels of the second picture, and A is the color of each of the pixels of the first picture.

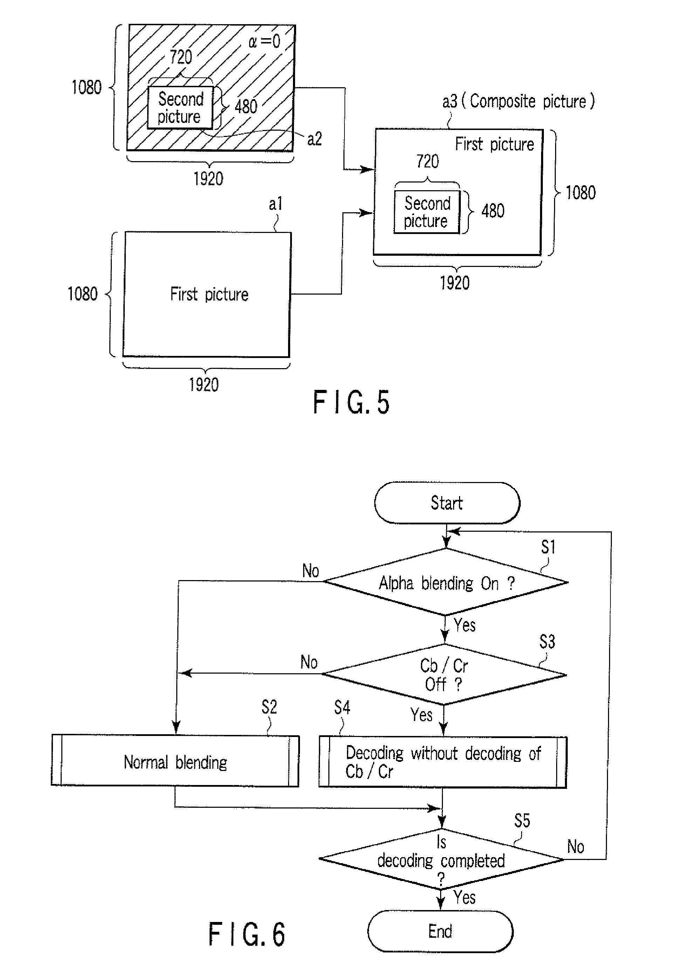

The blend processing (alpha blending) will be explained by referring to the case where a second picture (a2) of 720 x 480 pixels is superimposed on a first picture (a1) of 1920 x 1080 pixels by the blend processing to produce a composite picture (a3) as shown in FIG. 5.

In this case, alpha data on the pixels of a region of the first picture (a1) of 1920 x 1080 pixels, on which the second picture (a2) of $720 \times 480$ pixels is not superimposed, indicates "0". Thus, the above region, on which the second picture (a2) of 720 x 480 pixels is not superimposed, to be transparency. Accordingly, the first picture (a1) is displayed at non-transparency of 100% on the above region. Furthermore, in the composite picture (a3), pixels corresponding to picture data on the second picture (a2) of 720 x 480 pixels are displayed on the first picture (a1) at a transparency indicated by alpha data associated with the picture data on the second picture (a2). For example, the pixels corresponding to the picture data on the second picture (a2) at the time when the alpha data is "1" are displayed at a transparency of 100%, and pixels corresponding to picture data on the region of the first picture (a1), which is located below the above pixels, are not displayed.

The processing for decoding a color component can be omitted from the decode processing on pictures to be subjected to the above blend processing (alpha blending) can be performed by the following two methods:

(First method of omitting the decode processing)

In the decode processing explained with reference to FIG. 4, Cb/Cr decoding to be performed by decode modules hatched in FIG. 4, i.e., the inverse quantizating section 302, the inverse DCT section 303, the deblocking filter section 305, the motion vector prediction section 307, the interpolation prediction section 308, the weighted prediction section 309 and the intra-prediction section 310 is omitted.

(Second method of omitting the decode processing)

It should be noted that according to H. 264, in a High Profile, a Sequence Parameter Set (SPS) (which will be described later) in an H. 264 stream includes a flag called "chroma format idc", which indicates the ratio between attributes of a color component. When the value of the flag "chroma_format_idc" is "0" , it indicates that moving picture is monochrome. Thus, in this case, the decoder does not decode a Cb/Cr component which is a color component. This feature is utilized in the second method of omitting the decode processing. That is, in the High Profile, even when the flag "chroma_format_idc" indicates a value other than "0", it is rewritten to indicate "0" when it is decoded at the time of entropy decoding by the entropy decoding section 301, as a result of which decoding of the color component (Cb/Cr) by the decoder is omitted. Since the number of times the SPS is decoded is not large, rewriting of the flag "chroma_format_idc" does not burden the decoding processing.

The procedure of the decode processing to be performed by the video reproduction application program 201 will be explained with reference to the flowchart of FIG. 6.

The video reproduction application program 201 monitors whether alpha blending is performed by the blend processing module 213 or not (step S1). When the alpha blending is not performed ("NO" in the step S1), the video reproduction application program 201 selects the above normal decode processing as decode processing to be executed by the CPU 111, as a result of which the series of processings explained with reference to FIG. 4 are executed by the CPU 111 (step S2).

On the other hand, when the alpha blending is performed ("YES" in the step S1), the video reproduction application program 201 checks the user's setting of the system with respect to whether or not to omit decode processing on the color component (Cb/Cr) at the time of alpha blending (step S3). When the user sets the system such that the above decode processing on the color component (Cb/Cr) is not omitted ("NO" in the step S3), the video reproduction application program 201 selects the above normal decode processing as decode processing to be executed by the CPU 111 as in the case where the alpha blending is not performed, as a result of which the series of processings explained with reference to FIG. 4 are executed by the CPU 111 (step S2).

On the other hand, when the user sets the system such that the above decode processing on the color component (Cb/Cr) is omitted ("YES" in the step S3), the video reproduction application program 201 causes the CPU 111 to execute decode processing in which the decode processing of the color component (Cb/Cr) is omitted from the normal decode processing (step S4).

The above steps S1 to S4 are repeated until decoding of the entire moving picture stream is completed (step S5). Thus, while the steps S1 to S4 are being repeated, when the alpha blending is started or stopped, the decode processing is switched from the normal decode processing to the specific decode processing or vice verse in accordance with whether subsequent alpha blending is performed or not.

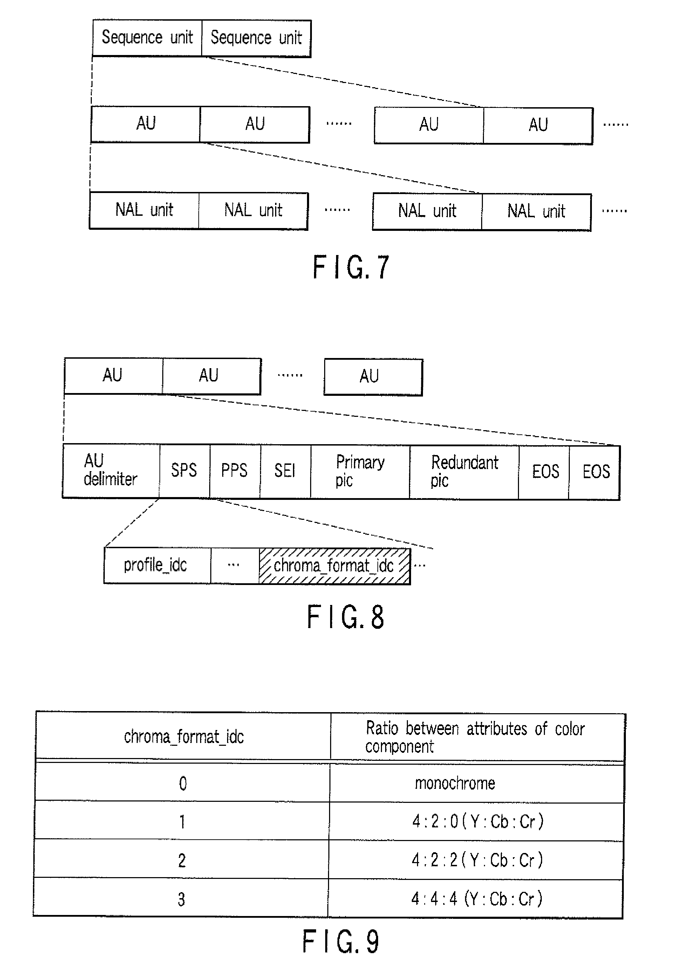

As shown in FIG. 7, each of sequence units according to H. 264 standards comprises a plurality of access units (AU) which are associated with respective pictures. Each of the access units comprises a plurality of NAL units. The number of kinds of NAL units is 32. It is possible to determine the kind of each NAL unit by analyzing a head portion thereof. FIG. 8 specifically shows that in the High Profile, a kind of NAL unit is applied as a NAL unit included in an AU whose configuration is shown in FIG. 7. Referring to FIG. 8, the blocks are NAL units.

In the High Profile, the video reproduction application program 201 refers to the flag "chroma_format_idc" included in an SPS which is one of NAL units included in an AU as shown in FIG. 8, and can omit decode processing of a color component (Cb/Cr) by changing the value of the flag "chroma__format_idc" to "0" with rewriting it as explained above. FIG. 9 is a view showing a relationship between the value of "chroma_format_idc" and the ratio of a color component. As shown in FIG. 9, when the value of the flag "chroma_format_idc" is "0", moving picture is monochrome. Also, it should be noted that when the value of the flag "chroma_format_idc" is any of "1", "2" and "3", the ratio between the brightness (Y), the color difference (Cb) and the color difference (Cr) is specified by numbers each of which corresponds to the number of bits, and which indicate the brightness (Y), the color difference (Cb) and the color difference (Cr), respectively, as shown in FIG. 9.

As explained above, according to the embodiment, the processing for decoding a color component is omitted based on setting of the system by the user during the blend processing (alpha blending).

The above explanation of the embodiment is given by referring to the case where in decoding of the entire lower picture or part of the lower picture on which the upper picture is superimposed, decoding of a color component is omitted. However, needless to say, in decoding of the upper picture, decoding of a color component can be omitted.

Furthermore, the entire decode control processing is executed by the computer program. Thus, the same advantage as in the above embodiment can be easily obtained simply by installing the computer program in an ordinary computer via a computer-readable storage medium.

In addition, the software decoder according to the embodiment of the present invention is applicable to not only personal computers, but PDAs and cellular phones, etc.

**Claims**

1. An information processing apparatus **characterized by** comprising:

   means (212) for executing a decoding process for decoding a compressively encoded moving picture stream;
   means (213) for producing a picture by superimposing a second picture on a first picture; and

means (211) for executing a controlling process for omitting a decoding process for decoding a color component from the decoding process of the decode processing unit on at least one of the first and second pictures.

2. The information processing apparatus according to claim 1, **characterized by** further comprising means for setting whether or not to execute the controlling process for omitting the decoding process for decoding the color component from the decoding process of the means (212) for executing a decoding process.

3. The information processing apparatus according to claim 1, **characterized in that** the means (211) for executing a controlling process executes the controlling process for omitting the decoding process for decoding the color component from the decoding process of the means (212) for executing a decoding process on an entire region of at least one of the first and second pictures.

4. The information processing apparatus according to claim 1, **characterized in that** the means (211) for executing a controlling process executes the controlling process for omitting a decoding process for decoding the color component from the decoding process of the means (212) for executing a decoding process on at least one of a region of the first picture and a region of second picture which overlap each other.

5. The information processing apparatus according to claim 1, **characterized in that** the means (211) for executing a controlling process executes the controlling process for omitting a decoding process for decoding the color component from the decoding process of the means (212) for executing a decoding process on the first and second pictures.

6. The information processing apparatus according to claim 1, **characterized in that** the means (211) for executing a controlling process sets a flag, which indicates a ratio of a color component in the moving picture stream, to zero in order to omit the decoding process for decoding the color component.

7. The information processing apparatus according to claims 1, **characterized in that** the means (213) for producing a picture executes a blending process for producing a composite picture in which a region of the first picture, on which the second picture is superimposed, is viewable through the second picture, based on alpha data indicating transparency of each of pixels in the second picture.

8. A program that is stored in computer-readable media and causes a computer (10) to execute a decoding process, **characterized by** comprising:

causing the computer (10) to execute a decoding process for decoding a compressively encoded moving picture stream;
causing the computer (10) to execute a blending process for producing a picture by superimposing a second image on a first image; and
causing the computer (10) to execute a controlling process for omitting a decoding process for decoding a color component from the decoding process for decoding the compressively encoded moving picture stream on at least one of the first and second pictures.

9. The program according to claim 8, **characterized by** further comprising causing the computer (10) to execute a setting process for setting whether or not to execute the controlling process for omitting the decoding process for decoding the color component from the decoding process for decoding the compressively encoded moving picture stream.

10. The program according to claim 8, **characterized in that** the causing the computer (10) to execute the controlling process causes the computer to execute the controlling process for omitting the decoding process for decoding the color component from the decoding process for decoding the compressively encoded moving picture stream on an entire region of at least one of the first and second pictures.

11. The program according to claim 8, **characterized in that** the causing the computer (10) to execute the controlling process causes the computer to execute the controlling process for omitting a decoding process for decoding the color component from the decoding process for decoding the compressively encoded moving picture stream on at least one of a region of the first picture and a region of second picture which overlap each other.

12. The program according to claim 8, **characterized in that** the causing the computer (10) to execute the controlling process causes the computer to execute the controlling process for omitting the decoding process for decoding the color component from the decode processing for decoding the compressively encoded moving picture stream on the first and second pictures.

13. The program according to claim 8, **characterized in that** the causing the computer (10) to execute the controlling process causes the computer to set a flag, which indicates a ratio of a color component in the moving picture stream, to zero in order to omit the decoding process for decoding the color component.

14. The program according to claim 8, **characterized in that** the causing the computer (10) to execute the blending process causes the computer to execute a blending process for producing a composite picture in which a region of the first picture, on which the second picture is superimposed, is viewable through the second picture, based on alpha data indicating transparency of each of pixels in the second picture.

FIG.1

F I G. 2

EP 1 701 553 A2

## FIG. 3

201 — Video reproduction application PGM

211 — Decode control module

213 — Blend processing module ← 212 — Decode execution module

200 — OS

202 — Display driver

Software

Hardware

114 — Graphics controller

**FIG. 3**

## FIG. 4

Input stream → 301 — Entropy decoding → 302 — Inverse quantization → 303 — Inverse DCT

311

310 — Intra-prediction

307 — Motion vector prediction

305 — Deblocking filter

304

309 — Weighted prediction ← 308 — Interpolation prediction ← 306 — Frame memory → Output image

Motion compensation

"——" indicates data flow
"----" indicates control

**FIG. 4**

FIG. 5

FIG. 6

| Sequence unit | Sequence unit |
|---|---|

| AU | AU | ...... | AU | AU | ...... |
|---|---|---|---|---|---|

| NAL unit | NAL unit | ...... | NAL unit | NAL unit | ...... |
|---|---|---|---|---|---|

FIG. 7

| AU | AU | ...... | AU |
|---|---|---|---|

| AU delimiter | SPS | PPS | SEI | Primary pic | Redundant pic | EOS | EOS |
|---|---|---|---|---|---|---|---|

| profile_idc | ... | chroma_format_idc | ... |
|---|---|---|---|

FIG. 8

| chroma_format_idc | Ratio between attributes of color component |
|---|---|
| 0 | monochrome |
| 1 | 4 : 2 : 0 ( Y : Cb : Cr ) |
| 2 | 4 : 2 : 2 ( Y : Cb : Cr ) |
| 3 | 4 : 4 : 4 ( Y : Cb : Cr ) |

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8339447 A